Europäisches Patentamt

**European Patent Office**

**Office européen des brevets**

(11) Numéro de publication: **0 083 922**
**B1**

(12) **FASCICULE DE BREVET EUROPÉEN**

(45) Date de publication du fascicule du brevet:
13.08.86

(21) Numéro de dépôt: **83100011.2**

(22) Date de dépôt: **04.01.83**

(51) Int. Cl.⁴: **F 16 H 57/02,** F 16 H 1/08

(54) Butée à collet à double effet pour train d'engrenages à axes parallèles.

(30) Priorité: **08.01.82 FR 8200175**

(43) Date de publication de la demande:
**20.07.83 Bulletin 83/29**

(45) Mention de la délivrance du brevet:
**13.08.86 Bulletin 86/33**

(84) Etats contractants désignés:
**CH DE FR GB LI**

(56) Documents cité:
**EP-A-0 021 223**
**FR-A-565 183**
**FR-A-2 124 996**
**GB-A-1 043 845**
**GB-A-2 078 332**

(73) Titulaire: **Compagnie Intelautomatisme, 1, rue de la Corderie Centra 379, F-94596 Rungis Cedex (FR)**

(72) Inventeur: **Wendling, Michel, 12, Quai de l'Ill, F-67400 Illkirch- Graffenstaden (FR)**

(74) Mandataire: **Weinmiller, Jürgen, Zeppelinstrasse 63, D-8000 München 80 (DE)**

LIBER, STOCKHOLM 1986

## Description

La présente invention concerne une buté à collet à axes parallèles double effet pour train d'engrenages à denture hélicoïdale simple du type comportant un pignon engrenant sur une roue dentée, l'axe dudit pignon et l'axe de ladite roue étant parallèles, ledit collet étant fretté au niveau de la partie médiane de la denture du pignon, ce collet venant s'engager dans une gorge ménagée dans la partie médiane de la roue, les faces latérales dudit collet coopérant avec les faces en vis-à-vis de la gorge de ladite roue pour absorber les efforts axiaux engendrés au cours de la rotation dudit train d'engrenages. Une telle butée est connue par le document GB-A-2 078 332.

Dans la butée selon ce document, le collet est fixé axialement sur le pignon sur lequel il est monté par le moyen d'une denture intérieure du collet de même pas que la denture du pignon, la denture du collet venant se placer, par une rotation d'un demi-pas, dans une saignée pratiquée dans la denture du pignon.

La présente invention a pour but de réaliser un dispositif de collet de butée à double effet qui soit solidement fixé axialement sur le pignon mais sans être obligé de réaliser une denture interne du collet comme cela est le cas du document antérieur cité plus haut.

Ce but est atteint par la butée telle que caractérisée dans la revendication 1.

De préférence, les deux parties sont frettées directement sur les dents du pignon, lesdites dents comportant ledit bossage.

En variante, les deux parties sont frettées sur le pignon par l'intermédiaire d'une bague en deux parties séparées par un plan diamétral, ajustées dans une gorge pratiquée dans le pignon, ladite bague comportant ledit bossage.

La figure 1 représente en coupe selon I-I de la figure 2 une butée à collet à double effet selon l'invention.

La figure 2 est une vue de côté de la figure 1 avec arrachement partiel.

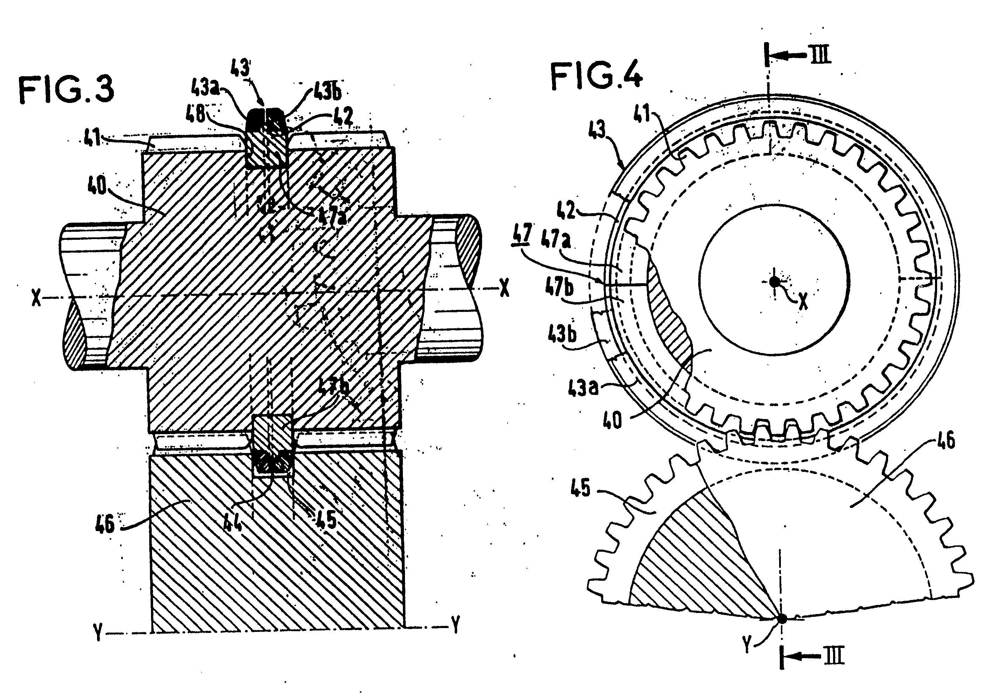

La figure 3 représente selon III-III de la figure 4 une réalisation préférée de l'invention.

La figure 4 est une vue de côté de la figure 3.

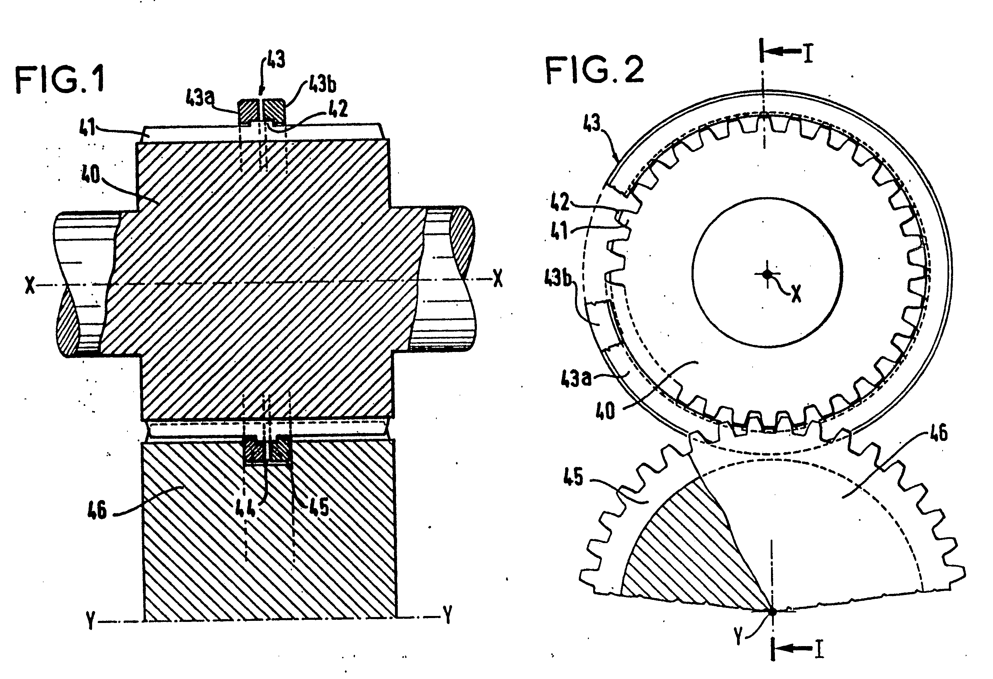

En se référant aux figures 1 et 2, on voit un pignon 40 dont chaque dent 41 comporte dans sa partie médiane un bossage 42 servant d'épaulement d'appui en sens inverse pour les deux parties 43a et 43b d'un collet de butée 43. Les deux parties 43a et 43b sont frettées sur le bossage 42, un jeu 44 étant ménagé entre les deux parties. Le collet 43 en deux parties s'engage dans une gorge 45 prévue dans la partie médiane d'une roue 46 engrenant avec le pignon 40.

Ainsi, comme on le voit sur les figures 1 et 2, grâce au collet en deux parties s'appuyant contre le bossage 42, la liaison axiale du collet 43 sur le pignon 40 est bien assurée et le montage des deux parties du collet sur le pignon est facile et on évite l'usinage d'une denture intérieure sur le collet comme dans le cas de l'art antérieur cité.

Les fig es 3 et 4 représentent une variante préférée de l'invention dans laquelle le bossage 42 servant d'épaulements d'appui pour les deux parties 43a et 43b est réalisé sur une bague 47 en deux parties 47a et 47b séparées par un plan diametral. La bague 47 est ajustée dans une gorge 48 pratiquée dans la partie médiane du pignon 40. Les deux parties du collet 43a et 43b sont frettées sur la bague 47. On obtient donc ainsi de la même façon que dans l'exemple précédent un montage facile et une fixation axiale du collet en deux parties, mais dans cette réalisation préférée, on a l'avantage d'un frettage continu du collet 43 sur la bague 47 et non pas uniquement sur les dents 41 du pignon 40 comme dans le cas précédent.

L'invention est avantageusement mise en oeuvre dans tous les types de trains d'engrenages notamment à dentures hélicoïdales, et à vitesse de rotation élevée.

Bien évidemment, le collet pourrait éventuellement être implanté sur la roue au lieu d'être implanté sur le pignon.

## Revendications

1/ Butée à collet (43) à double effet pour train d'engrenages à denture hélicoidale simple du type comportant un pignon (40) engrenant sur une roue dentée (46), l'axe XX dudit pignon et l'axe YY de ladite roue étant parallèles, ledit collet (43) étant fretté au niveau de la partie médiane de la denture (41) du pignon, ce collet venant s'engager dans une gorge (45) ménagée dans la partie médiane de la roue (46), les faces latérales dudit collet coopérant avec les faces en vis-à-vis de la gorge de ladite roue pour absorber les efforts axiaux engendrés au cours de la rotation dudit train d'engrenages, caractérisée en ce que ledit collet est réalisé em deux parties (43a, 43b) en vis-à-vis, frettées sur le pignon et s'appuyant en sens inverse l'une de l'autre contre des épaulememts réalisés par un bossage (42) prévu sur ledit pignon (40).

2/ Butée à collet selon la revendication 1, caractérisée en ce que les deux parties (43a, 43b) sont frettées directement sur les dents (41) du pignon, lesdites dents comportant ledit bossage (42).

3/ Butée à collet selon la revendication 1, caractérisée en ce que les deux parties (43a, 43b) sont frettées sur le pignon par l'intermédiaire d'une bague (47) en deux parties (47a, 47b) séparées par un plan diamétral, ajustées dans une gorge pratiquée dans le pignon, ladite bague (47) comportant ledit bossage (42).

## Patentansprüche

1. Kragenförmiger Anschlag (43) mit Doppelwirkung für Zahnradgetriebe mit einfacher schraubenförmiger Verzahnung von der Art, die ein Ritzel (40) aufweist, das in eine Zahnrad (46) eingreift, wobei die Achse XX des Ritzels und die Achse YY des Rads parallel verlaufen und der Kragen (43) in Höhe des Mittelteils der Verzahnung (41) auf das Ritzel aufgepreßt ist und in eine Nut (45) im mittleren Bereich des Zahnrads (46) eindringt, und wobei die Seitenflächen des Kragens mit den gegenüberliegenden Seiten der Nut des Zahnrads zusammenwirken, um die während der Drehung des Getriebes auftretenden Axialkräfte zu absorbieren, dadurch gekennzeichnet, daß der Kragen aus zwei einander gegenüberliegenden Teilen (43a, 43b) besteht, die auf das Ritzel aufgepreßt sind und sich von beiden Seiten gegen Schultern abstützen, die von einem Vorsprung (42) auf dem Ritzel (40) gebildet werden.

2. Kragenförmiger Anschlag nach Anspruch 1, dadurch gekennzeichnet, daß die beiden Teile (43a, 43b) unmittelbar auf die Zähne (41) des Ritzels, die den Vorsprung (42) aufweisen, aufgepreßt sind.

3. Kragenförmiger Anschlag nach Anspruch 1, dadurch gekennzeichnet, daß die beiden Teile (43a, 43b) auf das Ritzel über einen Ring (47) aufgepreßt sind, der entlang einer diametralen Ebene in zwei Teile (47a, 47b) aufgeteilt ist, in einer Nut im Ritzel sitzt, und den Vorsprung (42) aufweist.

## Claims

1. A double acting thrust collar for a toothed gear unit with a simple helicoidal gear transmssion, of the type comprising a pinion (40) meshing with a toothed wheel (46), the axis XX of said pinion and the axis YY of said wheel being parallel, said collar (43) being press-fitted to the pinion at the median level of the teeth, and penetrating into a groove (45) provided in the median zone of the wheel (46), the lateral faces of said collar cooperating with the respective opposing faces of said wheel in order to absorb the axial thrusts which exist when said gear unit rotates, characterized in that said collar is composed of two parts (43a, 43b) in face to face relationship, these parts being press-fitted to the pinion and bearing in countersense against shoulders which are presented by a lug (42) projecting from said pinion (40).

2. A thurst collar according to claim 1, characterized in that the two parts (43a, 43b) are directly press-fitted onto the teeth (41) of the pinion, said teeth comprising said lug (42).

3. A thurst collar according to claim 1, characterized in that the two parts (43a, 43b) are press-fitted onto the pinion via a ring (47) which is separated along a diametrical plane into two parts (47a, 47b) and which is adjusted in a groove of the pinion, said ring (47) comprising said lug (42).

FIG.1

FIG.2

0 083 922

FIG.3

43
43a  43b
48  42
41
40
X ———— X
47a
43b
46  44  45
Y ———— Y

FIG.4

III
43  41
42
47 47a
47b
43b
43a
40
X
45  46
Y
III

0 083 922

3